# EUROPEAN PATENT SPECIFICATION

(11) **EP 1 706 969 B1**
(45) Date of publication and mention of the grant of the patent: **02.10.2013**
(21) Application number: 05764976.6
(22) Date of filing: 14.06.2005
(51) Int. Cl.: H04L 12/70, H04L 29/06, H04L 29/08

(54) **SYSTEM FOR PROCESSING DATA UNIT OF RADIO PROTOCOL LAYER**
SYSTEM ZUR VERARBEITUNG VON DATENEINHEITEN EINER FUNKPROTOKOLSCHICHT
SYSTEME POUR TRAITER DES UNITES DE DONNEES D'UNE COUCHE DE PROTOCOLE RADIO

(30) Priority: 16.06.2004 KR 2004044712
(43) Date of publication of application: 04.10.2006
(73) Proprietor: LG Electronics, Inc., Seoul 150-010 (KR)
(72) Inventor: YI, Seung-June, Daeseong Youneed 101-1203, Seoul 137-880 (KR); CHUN, Sung-Duck, Satbyul Hanyang Apt. 601-1007, Anyang, Gyeonggi-Do 431-719 (KR); LEE, Young-Dae, Gyeonggi-Do 465-711 (KR)
(74) Representative: von Hellfeld, Axel
(86) International application number: PCT/KR2005/001812
(87) International publication number: WO 2005/125125

(56) References cited:
- WO-A-02/098105
- WO-A1-00/62467
- WO-A1-02/089376
- WO-A1-03/058852
- WO-A1-2004/042993
- WO-A2-2004/015906
- US-A1- 2003 169 771
- "HARQ Stall Avoidance" 3GPP RAN TSG/WG2, no. MEETING 25, 26 November 2002 (2002-11-26), pages 1-5, XP002253923

## Description

### Technical Field

The present invention relates to a medium access control (MAC) layer of a mobile communication system and, more particularly to a system for processing data units of a radio protocol layer.

### Background Art

Although mobile communication systems have developed remarkably, for high capacity data communication services, the performance of mobile communication systems cannot match that of existing wired communication systems. Accordingly, technical developments for IMT-2000, which is a communication system allowing high capacity data communications, are being made and standardization of such technology is being actively pursued among various companies and organizations.

A universal mobile telecommunication system (UMTS), which is a European-type IMT-2000 system, is a third generation mobile communication system that has evolved from a European standard known as Global System for Mobile communications (GSM) that aims to provide an improved mobile communication service based upon a GSM core network and wideband code division multiple access (W-CDMA) wireless connection technology.

In December 1998, the ETSI of Europe, the ARIB/TTC of Japan, the T1 of the United States, and the TTA of Korea formed a Third Generation Partnership Project (3GPP), which is creating the detailed specifications of the UMTS technology.

Within the 3GPP, in order to achieve rapid and efficient technical development of the UMTS, five technical specification groups (TSG) have been created for performing the standardization of the UMTS by considering the independent nature of the network elements and their operations.

Each TSG develops, approves, and manages the standard specification within a related region. Among these groups, the radio access network (RAN) group (TSG-RAN) develops the standards for the functions, requirements, and interface of the UMTS terrestrial radio access network (UTRAN), which is a new radio access network for supporting W-CDMA access technology in the UMTS.

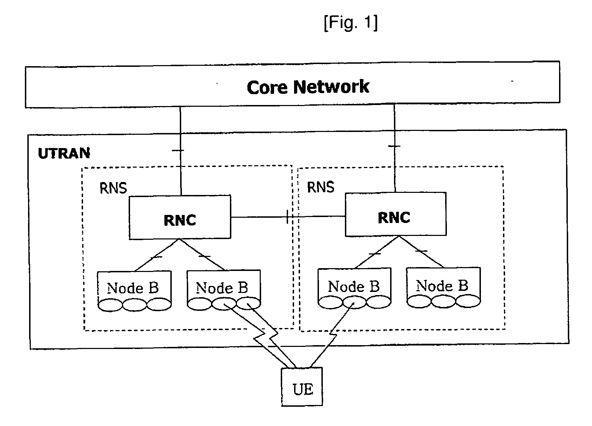

Figure 1 illustrates an exemplary basic structure of a general UMTS network. As shown in Figure 1, the UMTS is roughly divided into a terminal, or user equipment (UE), a UTRAN, and a core network (CN).

The UTRAN includes one or more radio network sub-systems (RNSs) and each RNS includes one radio network controller (RNC) and a plurality of base stations (referred to as hereinafter 'Node B'). Each Node B includes one or more cells.

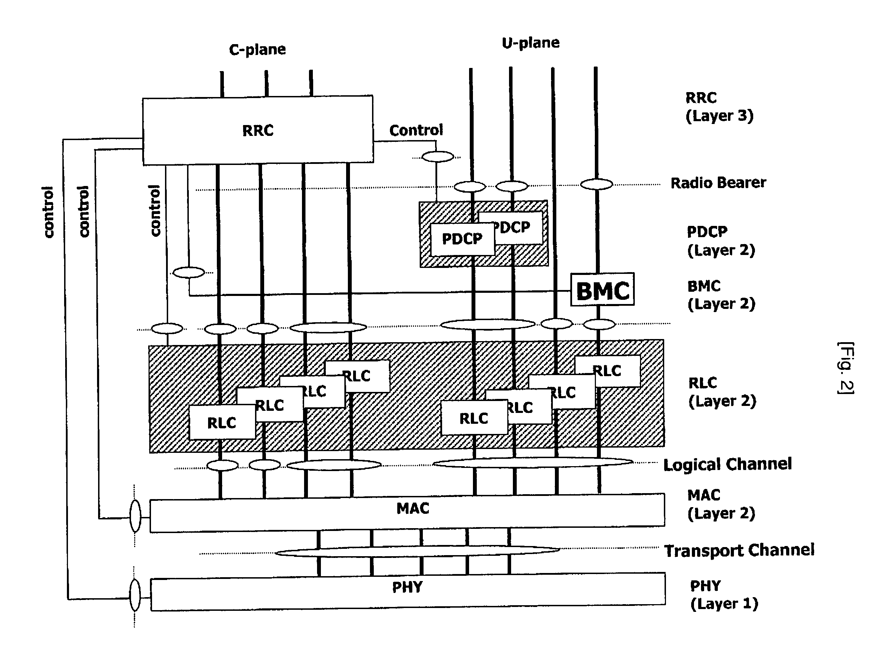

Figure 2 illustrates a structure of a radio interface protocol used in the UMTS. In the radio protocol layer, a terminal and a UTRAN exist as a pair and handle data transmission of the radio interface. The protocol layers in Figure 2 can be divided into a first layer (L1), a second layer (L2), and a third layer (L3) based on the three lower layers of an open system interconnection (OSI) standard model. Each radio protocol layer of Figure 2 will be described as follows.

First, the first layer (L1), namely, the physical layer, provides data to the radio interface by using various radio transmission techniques. The physical layer is connected to an upper layer, called a medium access control (MAC) layer, via a transport channel. The transport channel is divided into a dedicated transport channel and a common transport channel depending on whether the channel is shared.

The second layer (L2) includes a MAC layer, a radio link control (RLC) layer, a broadcast/multicast control (BMC) layer, and a packet data convergence protocol (PDCP) layer.

The MAC layer maps various logical channels to various transport channels and also performs logical channel multiplexing for mapping several logical channels to one transport channel. The MAC layer is connected to an upper layer, called the radio link control (RLC) layer, via a logical channel. The logical channel is divided into a control channel for transmitting information of a control plane and a traffic channel for transmitting information of a user plane depending on a type of transmitted information.

The MAC layer can be divided into a MAC-b sub-layer, a MAC-d sub-layer, a MAC-c/sh sub-layer, a MAC-hs sub-layer and a MAC-e sub-layer according to the type of transport channel to be managed.

The MAC-b sub-layer manages a BCH (Broadcast Channel), which is a transport channel handling the broadcasting of system information.

The MAC-c/sh sub-layer manages a common transport channel, such as a forward access channel (FACH) or a downlink shared channel (DSCH), which is shared by a plurality of terminals.

The MAC-d sub-layer manages a dedicated channel (DCH), which is a dedicated transport channel for a specific terminal.

In order to support high speed data transmission through uplink and downlink, the MAC-hs sub-layer manages a HS-DSCH (High Speed Downlink Shared Channel), which is a transport channel for high-speed downlink data transmissions, and the MAC-e sub-layer manages an E-DCH (Enhanced Dedicated Channel), which is a transport channel for high speed uplink data transmissions

A basic function of the RLC layer is to guarantee the quality of service (QoS) of each RB (Radio Bearer) and their corresponding data transmissions. The RLC layer provides an independent RLC entity for each RB in order to guarantee the particular QoS of the RB, and provides three RLC modes, namely, a transparent mode (TM), an unacknowledged mode (UM), and an acknowledged mode (AM) to support various types of QoS.

The RLC also controls a size of data to be suitable for being transmitted to the radio interface, for which the RLC performs a segmentation and concatenation function on data delivered from an upper layer.

The PDCP (Packet Data Convergence Protocol) layer, as a higher layer than the RLC layer, allows the data transmitted through an IP packet such as an IPv4 or IPv6 to be effectively transmitted on a radio interface with a relatively small bandwidth. To achieve this, the PDCP layer performs a header compression function such that only necessary information is transmitted as a header part of data in order to increase a transmission efficiency of the radio interface. Header compression is the basic function of the PDCP layer, so the PDCP layer exists only in the PS domain. In order to facilitate an effective header compression function with respect to each PS service, one PDCP entity exists per RB.

Furthermore, the BMC layer is positioned at an upper portion of the RLC layer, which schedules a cell broadcast message and broadcasts to terminals positioned in a specific cell.

There is a radio resource control (RRC) layer at a lowermost portion of the L3 layer. The RRC layer is defined only in the control plane, and controls parameters of the first and second layers with respect to establishment, reconfiguration and release of radio bearers, and also controls logical channels, transport channels, and physical channels. The RB refers to a logical path provided by the first and second layers of the radio protocol for data transmission between the terminal and the UTRAN. In general, the establishment of the RB refers to stipulating the characteristics of a protocol layer and a channel required for providing a specific data service, and setting the respective detailed parameters and operation methods.

An HSUPA (High Speed Uplink Packet Access) will now be described in detail. The HSUPA is a system allowing a terminal (UE) to transmit data to the UTRAN via the uplink at a high speed. The HSUPA employs an enhanced dedicated channel (E-DCH) instead of the related art dedicated channel (DCH) and also uses an HARQ (Hybrid ARQ) and AMC (Adaptive Modulation and Coding) required for high speed transmissions and a technique such as a Node B-controlled scheduling.

For the HSUPA, the Node B transmits to the terminal downlink control information for controlling the E-DCH transmission of the terminal. The downlink control information includes response information (ACK/NACK) for the HARQ, channel quality information for the AMC, E-DCH transmission rate allocation information for the Node B-controlled scheduling, E-DCH transmission start time and transmission time interval allocation information, and transport block size information.

The terminal transmits uplink control information to the Node B. The uplink control information includes E-DCH transmission rate request information for Node B-controlled scheduling, UE buffer status information, and UE power status information. The uplink and downlink control information for the HSUPA is transmitted via a physical control channel such as an E-DPCCH (Enhanced Dedicated Physical Control Channel).

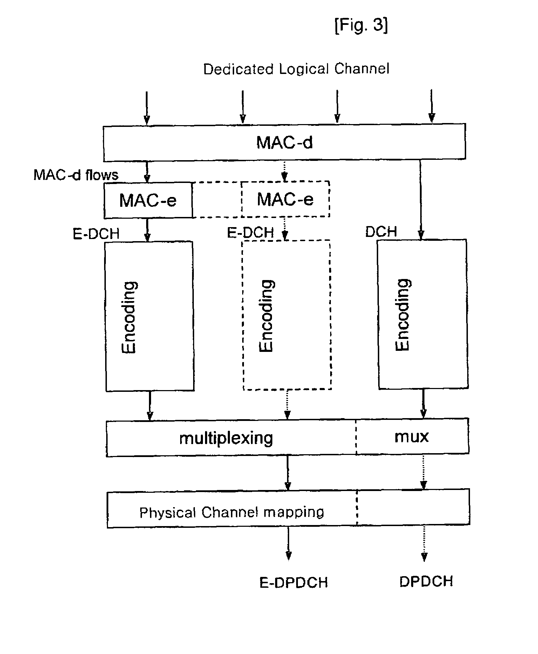

For the HSUPA, a MAC-d flow is defined between the MAC-d and MAC-e. In this case, a dedicated logical channel such as the DCCH (Dedicated Control Channel) or a DTCH (Dedicated Traffic Channel) is mapped to the MAC-d flow, the MAC-d flow is mapped to the transport channel E-DCH, and the transport channel E-DCH is mapped to the physical channel E-DPDCH (Enhanced Dedicated Physical Data Channel). The dedicated logical channel can be directly mapped to the transport channel DCH and, in this case, the DCH is mapped to the physical channel DPDCH (Dedicated Physical Data Channel). Such inter-channel mapping relationships are shown in Figure 3.

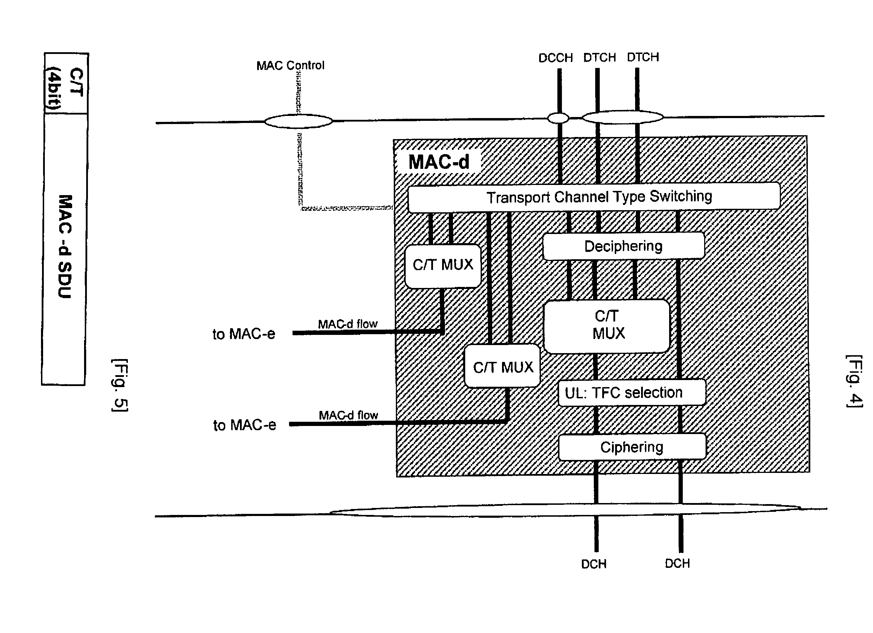

The MAC-d sublayer will be described in detail as follows. A transmitting side MAC-d sublayer forms a MAC-d PDU (Protocol Data Unit) from a MAC-d SDU received from the upper layer (namely, the RLC layer) and a receiving side MAC-d sublayer restores the MAC-d SDU from the MAC-d PDU received from the lower layer and delivers it to the RLC layer (namely, the upper layer). The MAC-d sublayer exchanges the MAC-d PDU with the MAC-e sublayer through the MAC-d flow or exchanges the MAC-d PDU with the physical layer via the DCH. The MAC-d sublayer performs a function, such as transport channel type switching, for selectively switching a transport channel according to an amount of data, ciphering or deciphering of the MAC-d PDU, selecting a transport format combination (TFC) suitable for a channel condition, and a C/T Mux for managing a logical channel identifier (C/T) for identifying each dedicated logical channel when several dedicated logical channels are multiplexed and mapped to one DCH or to one MAC-d flow. A C/T field, such as, a logical channel identifier, is used only when a logical channel is multiplexed, and added to a header of each MAC-d SDU to form the MAC-d PDU. Presently, the C/T field is defined to have 4 bits, and therefore, the maximum number of logical channels that can be multiplexed to one DCH or one MAC-d flow is 16. The structure of the terminal, specifically, the transmitting side of the MAC-d sublayer for the HSUPA, is shown in Figure 4 and a MAC-d format when the logical channels are multiplexed is shown in Figure 5.

The transmitting side MAC-e sublayer forms the MAC-e PDU from the MAC-d PDU, specifically, the MAC-e SDU, which is received through the MAC-d flow from the MAC-d sublayer, and a receiving side MAC-e sublayer restores the MAC-e SDU from the MAC-e PDU received from the lower layer, specifically, the physical layer and delivers it to the upper layer. The MAC-e sublayer exchanges the MAC-e PDU with the physical layer via the transport channel E-DCH.

The MAC-e sublayer performs a different function depending on whether it belongs to the transmitting side or to the receiving side. First, the transmitting side MAC-e sublayer performs a function of scheduling data transmission according to uplink/ downlink control information and processing it according to a priority level of data, a function of hybrid ARQ in order to reliably transmit data at a high speed, and a function of TFRC (Transport Format and Resource Combination) selection in order to select a transport format suitable for a channel condition and resource combination selection.

In particular, the scheduling/priority handling block also serves to form the MAC-e PDU to be transmitted to the physical channel. Specifically the scheduling/priority handling block concatenates MAC-d PDUs or MAC-e SDUs received during a certain transmission time interval (TTI) through one MAC-d flow from the MAC-d sublayer according to their lengths, adds the length information to the MAC-e header, adds a 6-bit transmission sequence number (TSN) of the transport block to be transmitted to the header, and adds a 3-bit PID (Priority ID) for identifying a priority level of the MAC-d flow and a logical channel to the header. Furthermore, the scheduling/priority handling block adds a 1-bit version flag (VF) to the header to form the MAC-e PDU in order to later support a different MAC-e PDU format.

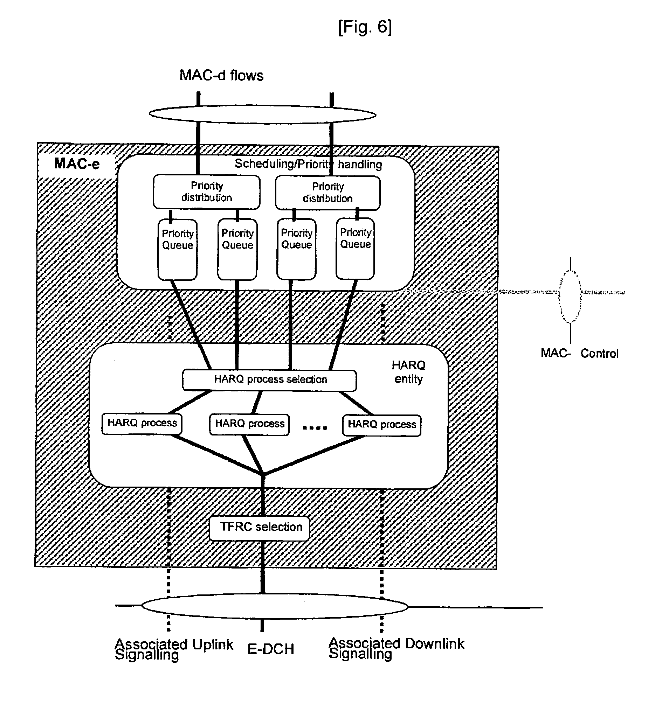

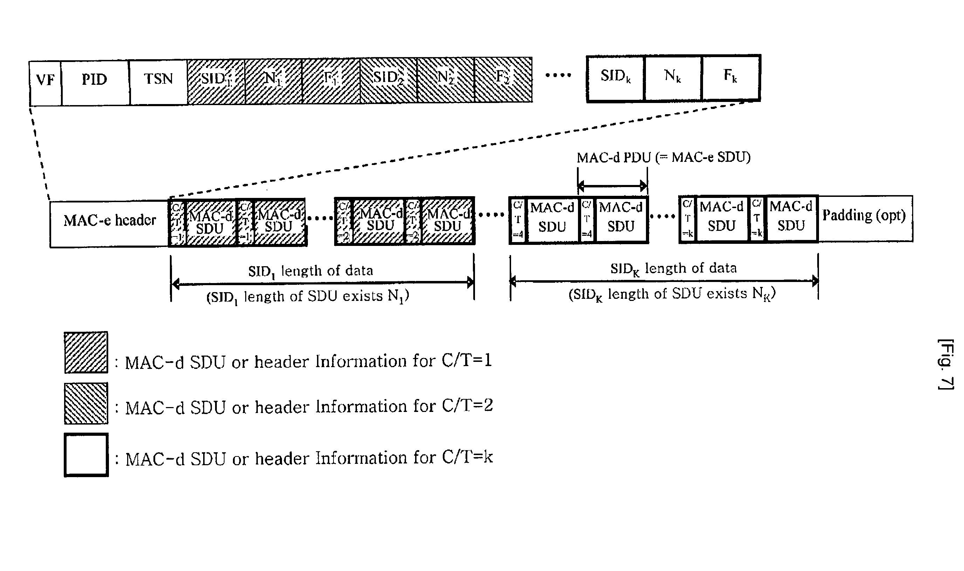

The structure of the transmitting side MAC-e sublayer and the MAC-e PDU format are shown in Figures 6 and 7.

In general, the reason for using a certain type of PDU format is that the receiving side receives data as a series of bit streams (e.g., 0, 1, 0, 1), so without determining a format, the receiving side cannot interpret what each bit represents. In the HSUPA, the MAC-e PDU format shown in Figure 7 is used for which there are some restrictions as explained below.

First, only one MAC-e PDU is transmitted during one TTI. Thus, a TSN is added to every MAC-e PDU.

Second, one MAC-e PDU includes only the data of logical channels which belong to the same MAC-d flow and have the same priority level. Therefore, the PID is interpreted as a MAC-d flow ID and logical channel priority.

Third, the data of several logical channels are multiplexed to one MAC-e PDU in order to obtain multiplexing gain. In general, the length of the SDU can be different for each logical channel, so information indicating the length of each SDU is added to the header.

Of the above conditions, the length of the header of the MAC-e PDU varies according to the third condition. The length information of the SDU includes three fields: a 3-bit SID (Size Index) field for indicating a length of each SDU, a 7-bit N field for indicating the number of SDUs having the length of the SID, and a 1-bit F (Flag) field for indicating whether the next field is the S1D length information or a MAC-e SDU. Specifically, the length information of the SDU includes the three fields of SID, N and F, and its size (length) increases to correspond with the number of lengt h types of the SDU.

In order to wirelessly transmit a certain PDU via the physical channel, the PDU must have a determined length for coding, such as modulation and spreading performed in the physical channel. Therefore, the MAC-e sublayer generates a PDU suitable for a size required by the physical channel by padding an end portion of the PDU. Such padding portion serves to adjust the size of the PDU and does not contain any information, so when the receiving side receives the PDU, it discards the padding portion.

The receiving side interprets the received bit streams according to the format shown in Figure 7. Specifically, the receiving side interprets the bit streams starting from the VF (1 bit), PID (3 bits), TSN (6 bits), SID (3 bits), N (7 bits), F (1 bit), and interprets the header until the F field indicates that the next portion is the SDU. When the F field indicates that the next portion is the SDU, the receiving side disassembles the SDU, beginning with the next bit, according to the length information of the SDU, specifically, according to the length and the number of SDUs from the combination of SID, N and F. After extracting the SDU, a remaining portion is discarded as a padding portion.

If the MAC-e SDU has the same length, the length information of one SDU can be used to indicate the lengths of other SDUs, despite the use of several logical channels for transmitting data. With reference to Figure 7, the first SDU length information, specifically, the combination of SID1, N 1 and F1, indicates the data length of both a first logical channel (C/T=1) and a second logical channel (C/T=2), and Kth SDU length information, specifically, the combination of SIDK, NK and FK indicates the data length of the fourth logical channel (C/T=4) to the kth logical channel (C/T=k). Specifically, the MAC-e sublayer does not process the data by logical channel, but rather processes the data according to the size of the MAC-e SDU.

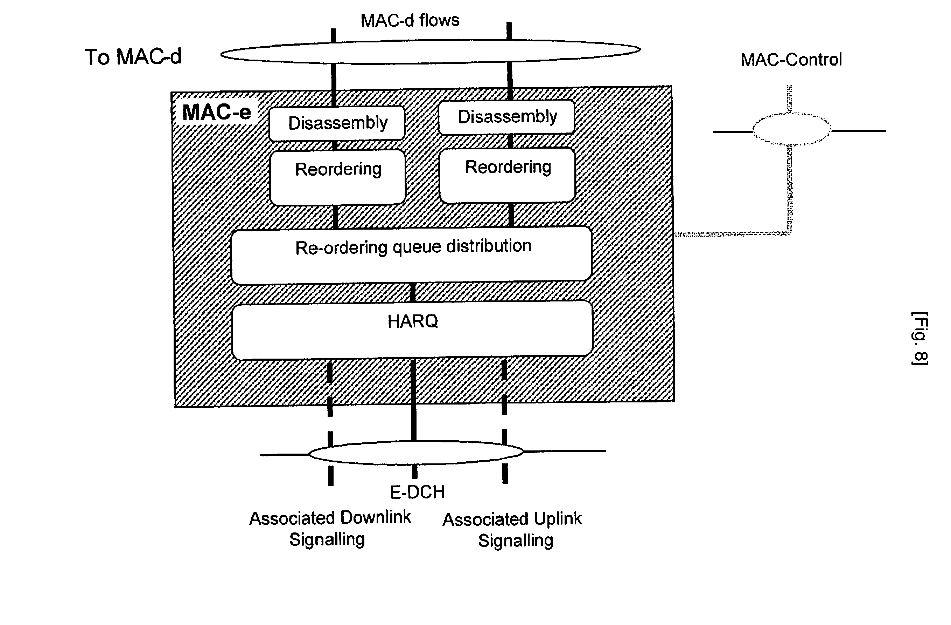

The structure of the receiving side MAC-e sublayer is shown in Figure 8. The HARQ block of the receiving side corresponds to the HARQ block of the transmitting side, and each HARQ process of the HARQ block performs an SAW (Stop And Wait) ARQ function with the transmitting side. When the receiving side receives one MAC-e PDU through the HARQ process, it reads the VF of the header of the MAC-e PDU to check the version and checks the next PID field to recognize which MAC-d flow and which priority level the received PDU corresponds to. This operation is performed in a re-ordering queue distribution block and then the PDU is delivered to a reordering block that is indicated by the PID.

The reordering function of the receiving side is notable compared with the transmitting side in that the MAC-e sublayer receives the MAC-e PDUs through the HARQ out-of-sequence, but the RLC layer, specifically, the upper layer following the MAC-d sublayer requires in-sequence delivery. Therefore, the MAC-e sublayer reorders the non-sequentially received PDUs and sequentially delivers them to the upper layer. To perform the reordering, each PID has a reordering buffer and, although a certain PDU may be successfully received, if the TSN is not in sequence, the PDU is temporarily stored in a buffer, and when in-sequence delivery of the PDU is possible, it is delivered to the upper layer. A portion of the TSN, except the VF and the PID of the header of the PDU, is stored in the reordering buffer and when the PDU is delivered to a disassembly block, the SDU is disassembled upon checking SDU length information of the SID, N and F, and then delivered to the upper MAC-d sublayer. Specifically, only the MAC-e SDU or the MAC-d PDU is delivered through the MAC-d flow.

In the HSUPA, the structure of the MAC-d sublayer of the UTRAN of the receiving side is similar to the MAC-d sublayer of the terminal of the transmitting side. Specifically, portions related to the HSUPA perform the functions of the transmitting side, but in opposite order. As for the operations related to the DCH, the only difference is that the terminal performs the TFC selection, while the UTRAN performs the scheduling/priority handling.

In the HSUPA, the C/T Mux block reads the C/T field of the MAC-d PDUs received through the MAC-d flow from the MAC-e sublayer to detect which logical channel the data (i.e., MAC-d PDUs) belongs to, removes the C/T field, extracts the MAC-d SDU and delivers it via a channel indicated by the C/T field to the upper RLC layer. However, the C/T field exists only when logical channels are multiplexed. If logical channels are not multiplexed, the received MAC-d PDU is the MAC-d SDU, so the C/T Mux block delivers it directly to the RLC layer.

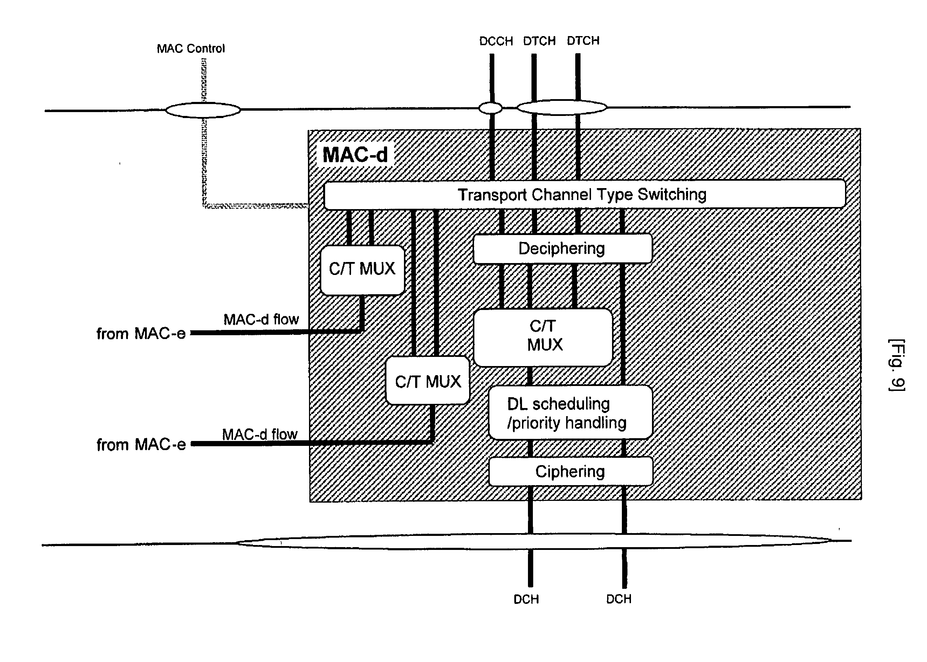

Figure 9 shows the structure of the MAC-d sub-layer of the UTRAN in the HSUPA. The receiving side MAC-e has a reordering buffer for each PID. When the MAC-e PDU is received, the MAC-e selects a reordering buffer for delivering the received data by using the PID information included in the received MAC-e PDU, determines at which portion in the selected reordering buffer the MAC-e PDU must be positioned by using the TSN information included in the received MAC-e PDU, and aligns the data.

In the reordering buffer, all of the MAC-e PDUs having a smaller TSN value than the TSN value of the received MAC-e PDUs are transferred to an upper stage and the received MAC-e PDU is transferred to the upper stage.

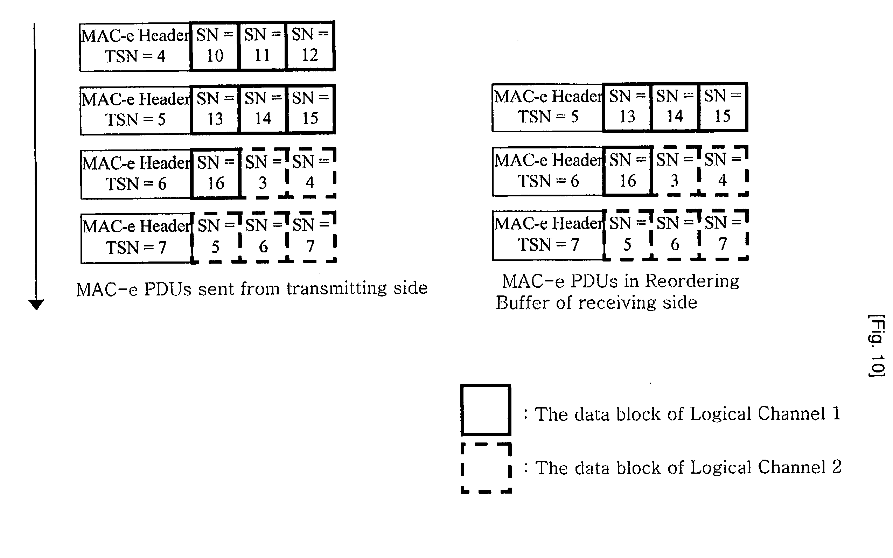

However, in the conventional art, the efficiency of data transmission is degraded and unnecessary memory is required in the receiving side. For example, it is assumed that there are MAC-e PDUs transmitted from the transmitting side and MAC-e PDUs accumulated in the reordering buffer of the receiving side after arrival as shown in Figure 10. For the sake of explanation, only a TSN is shown with respect to content of MAC-e PDU headers and it is assumed that the MAC-e PDUs have the same PID.

Furthermore, it is also assumed that MAC-e PDUs up to the MAC-e PDU with a TSN=3 have been normally received and processed.

Figure 10 illustrates the construction of the MAC-e PDUs transmitted and received between the transmitting side and the receiving side. The transmitting side has transmitted MAC-e PDUs from TSN=5 to TSN=7 and the receiving side has received MAC-e PDUs from TSN=5 to TSN=7. Even though the MAC-e PDUs corresponding to TSN=5 to TSN=7 have already been received, because the MAC-e PDU with a TSN=4 has not yet been received at the receiving side, the MAC-e PDUs from TSN=4 to TSN=7 are in standby in the reordering buffer without being processed.

As noted in Figure 10, the MAC-e PDU with the TSN=4 that has not yet been received at the reordering buffer includes only MAC-d SDUs corresponding to logical channel 1. Specifically, the MAC-e PDU with the TSN=4 does not include a MAC-d
SDU corresponding to logical channel 2. Therefore, MAC-d SDUs corresponding to logical channel 2 included in the MAC-e PDUs from the TSN=5 to TSN=7 could be immediately transmitted to the upper stage.

However, in the conventional art, the MAC-d SDUs corresponding to logical channel 2 included in the MAC-e PDUs from the TSN=5 to TSN=7 remain in the reordering buffer without being separated from the MAC-e PDU and are not transmitted to the upper stage, thereby causing an unnecessary transmission delay.

Specifically, if the data corresponding to logical channel 2 are used for a streaming or a voice service, which is to be transmitted in real time, the problem is more severe.

Document WO 02/098105 A1 concerns a method for handling TCP connections, in particular controlling in-sequence delivery of internet protocol packets for a given TCP connection. A Radio Link Control (RLC) entity provides a plurality of processing and re-ordering steps on received RLC PDUs.

### Disclosure of Invention

### Technical Problem

The present invention is directed to a system for processing data units of a radio protocol layer.

### Technical Solution

Additional features and advantages of the invention will be set forth in the de- scription which follows, and in part will be apparent from the description, or may be learned by practice of the invention. The objectives and other advantages of the invention will be realized and attained by the structure particularly pointed out in the written description and claims hereof as well as the appended drawings.

To achieve these and other advantages and in accordance with the purpose of the present invention, as embodied and broadly described, the present invention provides an apparatus for processing data units in a communications system having the features of claim 1.

A method for processing packet data in a communications system comprises the steps of receiving at least one data unit from each of a plurality of logical channels, constructing a data block comprising the at least one data unit from each of the plurality of logical channels and assigning a sequence number to the data block, transmitting the data block, receiving and processing the data block such that the at least one data unit from each of the plurality of logical channels is forwarded to a reordering buffer for each of the plurality of logical channels, and delivering the at least one data unit to each of the plurality of logical channels according to the sequence number.

Preferably, the step of processing comprises disassembling the data block into the at least one data unit from each of the plurality of logical channels. The step of delivering comprises determining whether the at least one data unit from each of the plurality of logical channels was received in sequence.

In one aspect of the present invention, if it is determined that the least one data unit from a specific logical channel was received in sequence, the data unit is delivered to the corresponding logical channel. If it is determined that the least one data unit from a specific logical channel was received out of sequence, the data unit is reordered with any other data units stored in the reordering buffer and it is determined if the reordered data units are in the proper sequence for delivery to the corresponding logical channel.

In another aspect of the present invention, the steps of receiving and delivering are performed in a medium access control (MAC) layer.

In another embodiment of the present invention, a method for processing packet data in a communications system comprises receiving a data block comprising at least one data unit from each of a plurality of logical channels and having an assigned sequence number, processing the data block such that the at least one data unit from each of the plurality of logical channels is forwarded to a reordering buffer for each of the plurality of logical channels, and delivering the at least one data unit to each of the plurality of logical channels according to the sequence number.

Preferably, the step of processing comprises disassembling the data block into the at least one data unit from each of the plurality of logical channels. The step of delivering comprises determining whether the at least one data unit from each of the plurality of logical channels was received in sequence.

In one aspect of the present invention, if it is determined that the least one data unit from a specific logical channel was received in sequence, the data unit is delivered to the corresponding logical channel. If it is determined that the least one data unit from a specific logical channel was received out of sequence, the data unit is reordered with any other data units stored in the reordering buffer and it is determined if the reordered data units are in the proper sequence for delivery to the corresponding logical channel.

In another aspect of the present invention, the steps of receiving and delivering are performed in a medium access control (MAC) layer.

In another embodiment of the present invention, a system for processing packet data in a communications system comprises a mobile terminal for receiving at least one data unit from each of a plurality of logical channels, constructing a data block comprising the at least one data unit from each of the plurality of logical channels and assigning a sequence number to the data block, and transmitting the data block.

The system further comprises a network for receiving and processing the data block such that the at least one data unit from each of the plurality of logical channels is forwarded to a reordering buffer for each of the plurality of logical channels, and delivering the at least one data unit to each of the plurality of logical channels according to the sequence number.

Preferably, the network is adapted to process the data block by disassembling the data block into the at least one data unit from each of the plurality of logical channels. The network is adapted to deliver the at least one data unit by determining whether the at least one data unit from each of the plurality of logical channels was received in sequence.

In one aspect of the present invention, if it is determined that the least one data unit from a specific logical channel was received in sequence, the data unit is delivered to the corresponding logical channel. If it is determined that the least one data unit from a specific logical channel was received out of sequence, the data unit is reordered with any other data units stored in the reordering buffer and it is determined if the reordered data units are in the proper sequence for delivery to the corresponding logical channel.

In another aspect of the present invention, the receiving and delivering functions of the network are performed in a medium access control (MAC) layer.

In another embodiment of the present invention, a network for processing packet data in a communications system comprises a transmitter adapted to transmit data via a first channel and to transmit control information to a mobile terminal via a second channel, a receiver adapted to receive information from the mobile terminal, and a controller. The controller is adapted to receive a data block comprising at least one data unit from each of a plurality of logical channels and having an assigned sequence number, process the data block such that the at least one data unit from each of the plurality of logical channels is forwarded to a reordering buffer for each of the plurality of logical channels, and deliver the at least one data unit to each of the plurality of logical channels according to the sequence number.

Preferably, the controller is adapted to process the data block by disassembling the data block into the at least one data unit from each of the plurality of logical channels. The controller is adapted to deliver the at least one data unit by determining whether the at least one data unit from each of the plurality of logical channels was received in sequence.

In one aspect of the invention, if it is determined that the least one data unit from a specific logical channel was received in sequence, the data unit is delivered to the corresponding logical channel. If it is determined that the least one data unit from a specific logical channel was received out of sequence, the data unit is reordered with any other data units stored in the reordering buffer and it is determined if the reordered data units are in the proper sequence for delivery to the corresponding logical channel.

In another aspect of the invention, the controller is adapted in a medium access control (MAC) layer.

It is to be understood that both the foregoing general description and the following detailed description of the present invention are exemplary and explanatory and are intended to provide further explanation of the invention as claimed.

### Description of Drawings

The accompanying drawings, which are included to provide a further understanding of the invention and are incorporated in and constitute a part of this specification, illustrate embodiments of the invention and together with the description serve to explain the principles of the invention. Features, elements, and aspects of the invention that are referenced by the same numerals in different figures represent the same, equivalent, or similar features, elements, or aspects in accordance with one or more embodiments.

Figure 1 illustrates a conventional network structure of a UMTS.

Figure 2 illustrates the structure of a conventional radio protocol used in the UMTS.

Figure 3 illustrates a conventional MAC layer of an HSUPA.

Figure 4 illustrates the structure of a conventional MAC-d sublayer of a terminal.

Figure 5 illustrates a format of a conventional MAC-d PDU for logical channel multiplexing.

Figure 6 illustrates the structure of a conventional MAC-e sublayer of a transmitting side.

Figure 7 illustrates a format of a conventional MAC-e PDU.

Figure 8 illustrates the structure of a conventional MAC-e sublayer of a receiving side.

Figure 9 illustrates the structure of a conventional MAC-d sublayer of a UTRAN.

Figure 10 illustrates an example of conventional MAC-e PDUs and reordering buffers.

Figure 11 illustrates a first embodiment of a conventional MAC-e structure of a receiving side in accordance with the present invention.

Figure 12 illustrates a first embodiment of a MAC-d structure of the receiving side in accordance with the present invention.

Figure 13 illustrates a first embodiment of a MAC-e structure of a transmitting side in accordance with the present invention.

Figure 14 illustrates a second embodiment of a MAC-e structure of the transmitting side in accordance with the present invention.

Figure 15 illustrates a first embodiment of a MAC-d structure of the transmitting side in accordance with the present invention.

Figure 16 illustrates a third embodiment of a MAC-e structure of the transmitting side in accordance with the present invention.

Figure 17 illustrates a second embodiment of a MAC-e structure of the receiving side in accordance with the present invention.

Figure 18 illustrates a second embodiment of a MAC-d structure of the receiving side in accordance with the present invention.

Figure 19 illustrates a fourth embodiment of a MAC-e structure of the transmitting side in accordance with the present invention.

Figure 20 illustrates a third embodiment of a MAC-e structure of the receiving side in accordance with the present invention.

Figure 21 illustrates a first embodiment of a MAC-e PDU in accordance with the present invention.

Figure 22 illustrates a second embodiment of the MAC-e PDU in accordance with the present invention.

Figure 23 illustrates a third embodiment of the MAC-e PDU in accordance with the present invention.

Figure 24 illustrates a fourth embodiment of the MAC-e PDU in accordance with the present invention.

Figure 25 illustrates a fifth embodiment of the MAC-e PDU in accordance with the present invention.

Figure 26 illustrates a sixth embodiment of the MAC-e PDU in accordance with the present invention.

Figure 27 illustrates a seventh embodiment of the MAC-e PDU in accordance with the present invention.

Figure 28 illustrates an eighth embodiment of the MAC-e PDU in accordance with the present invention.

Figure 29 illustrates a ninth embodiment of the MAC-e PDU in accordance with the present invention.

Figure 30 illustrates a network for processing packet data in a communications system in accordance with one embodiment of the present invention.

### Mode for Invention

The preferred embodiment of the present invention will now be described with reference to the accompanying drawings.

The present invention relates to a system for processing data units of a MAC layer and is directed to reordering data units of a MAC-d SDU or MAC-d PDU, specifically, a construction unit of a MAC-d SDU, compared to the conventional art in which the reordering operation is performed according to the units of a MAC-e PDU.

A basic concept of the present invention is that one reordering buffer is provided per logical channel set in a receiving side so that each logical channel reordering buffer performs reordering on a MAC-d SDU, compared with the conventional art in which one priority buffer is provided per PID in the receiving side and the priority buffer performs the reordering operation on the MAC-e PDU.

Preferably, a sequence number used for the reordering process of the logical channel reordering buffer is included in the MAC-d SDU.

Preferably, the sequence number used for the reordering process of the logical channel reordering buffer is a sequence number used for an RLC layer or a sequence number included in a MAC-d SDU.

The reordering process or operation refers to reordering received data blocks (MAC-d SDUs) in sequence by using information such as a sequence number if the data blocks are out of sequence, and then transferring them to an upper stage.

For example, it is assumed that five data blocks are created and numbered by sequence numbers of 0, 1, 2, 3, 4, respectively, according to the order of creation. In this respect, it is assumed that the data blocks are received at a receiving side in order of 0,3,1,2,4. Because the data block numbered '0' has been received in order, the receiving side immediately transmits it to the upper stage. When the data block 3 is received, it is kept in the reordering buffer because data blocks 1 and 2 have not been received yet. Thereafter, when the data block 1 is received, because the data block 1 is the block in sequence after data block 0, it is immediately transferred to the upper stage. Furthermore, when the data block 2 is received, it is immediately transferred to the upper stage and data block 3, which has been kept in the reordering buffer, is also transferred because data blocks 0, 1 and 2 have been all transferred. In this manner, the reordering operation is performed such that data blocks which have been received out of sequence are transferred to the upper stage in sequence.

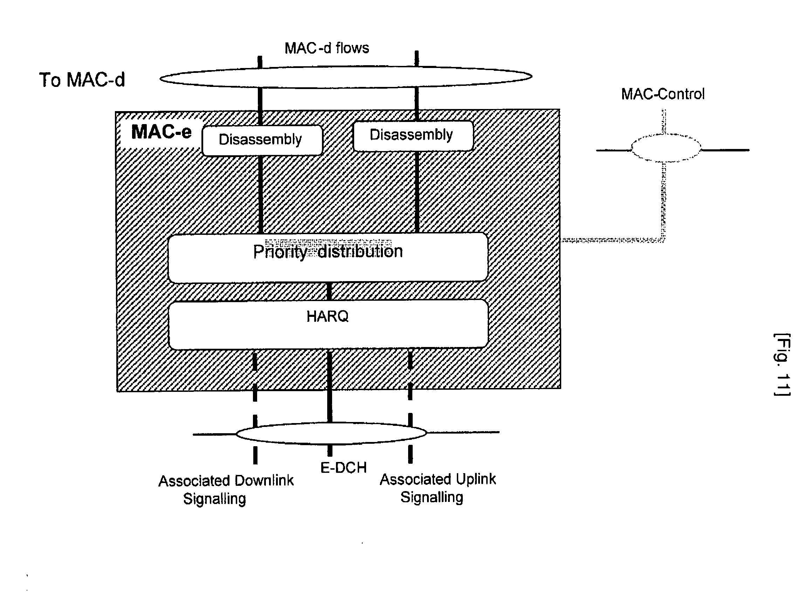

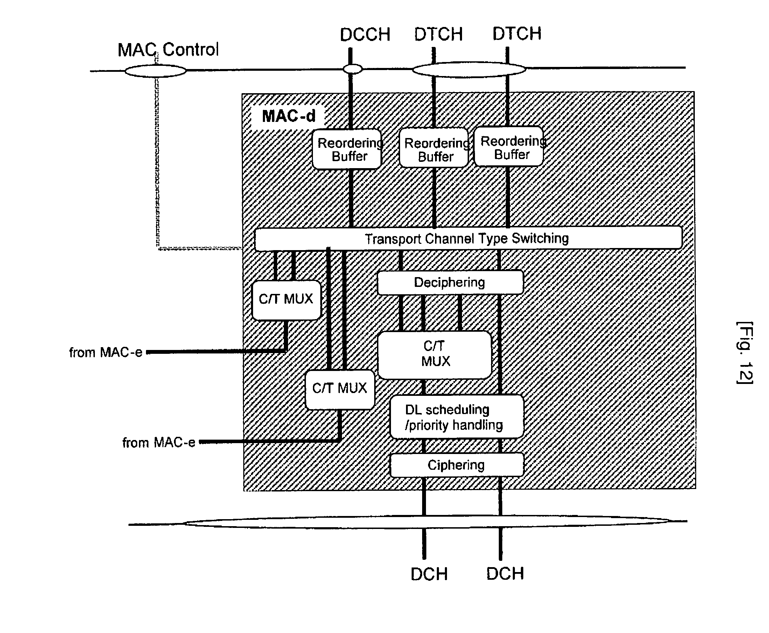

Figure 11 shows a first embodiment of a MAC-e structure of a receiving side in accordance with the present invention and Figure 12 shows a first embodiment of a MAC-d structure of the receiving side in accordance with the present invention.

The MAC-e includes the reordering buffers according to logical channels as shown in Figure 12, unlike the conventional art in which the reordering buffer is provided according to priority of the MAC-e to perform the reordering operation.

The operations of the MAC-d and the MAC-e will now be described with reference to Figures 11 and 12.

When the MAC-e of the receiving side receives the MAC-e PDU, it transfers the MAC-e PDU to a disassembly block corresponding to a priority level of the PID included in the MAC-e PDU. The disassembly block disassembles the received MAC-e PDU to reconfigure it into MAC-d PDUs and transfers the reconfigured MAC-d PDUs to the MAC-d. Upon receiving the MAC-d PDUs, the MAC-d transfers MAC-d SDUs included in each of the MAC-d PDUs to each corresponding logical channel indicated by a C/T field included in each of the MAC-d PDUs. Thereafter, each logical channel reordering buffer existing in each logical channel reorders the MAC-d SDUs in sequence according to their sequence number.

As stated above, in the present invention, the reordering operation is performed in the logical channel reordering buffer existing for each logical channel. Although the logical channel reordering buffers are located in the MAC-d as illustrated in Figure 12, they may be located between the MAC-d and the RLC or in the RLC. Also, in the MAC-d, the reordering buffers may be located between a transport channel type multiplexing block and the upper stage to perform the reordering process as illustrated or they may be located between a C/T Mux block and the transport channel type multiplexing block in the MAC-d to perform the reordering process.

Referring back to the structure of the MAC-e PDUs shown in Figure 10, all the MAC-e PDUs have a TSN field. The TSN field is a value required for performing the reordering operation in the reordering buffer according to priority. Specifically, in the conventional art, the order of MAC-e PDUs is recognized according to the TSN value and the reordering process is performed based on the recognized order. In the present invention, since the reordering operation is performed using the logical channel reordering buffers, the reordering buffers according to priority in the MAC-e are not required and information related to the transmission order among MAC-e PDUs is not necessary.

Inclusion of the TSN whenever the MAC-e PDU is transmitted in the radio interface increases the overhead of the MAC-e PDU and degrades transmission efficiency of the radio interface. Therefore, the present invention additionally proposes a MAC-e structure which does not use the TSN.

In the structure without the TSN, when the MAC-e receives new MAC-e PDUs, the MAC-e transfers the MAC-d PDUs to a disassembly block corresponding to the priority level of each PID included in the MAC-e PDUs. Then, the disassembly block reconfigures the MAC-d PDUs from the MAC-e PDUs and transfers them to the MAC-d. Upon receiving the MAC-d PDUs, the MAC-d transfers the MAC-d SDUs included in each of the MAC-d PDUs to each logical channel indicated by each C/T field included in the MAC-d PDUs. Then, the logical channel reordering buffer existing for each logical channel reorders the MAC-d SDUs based on the sequence number included in the received MAC-d SDUs.

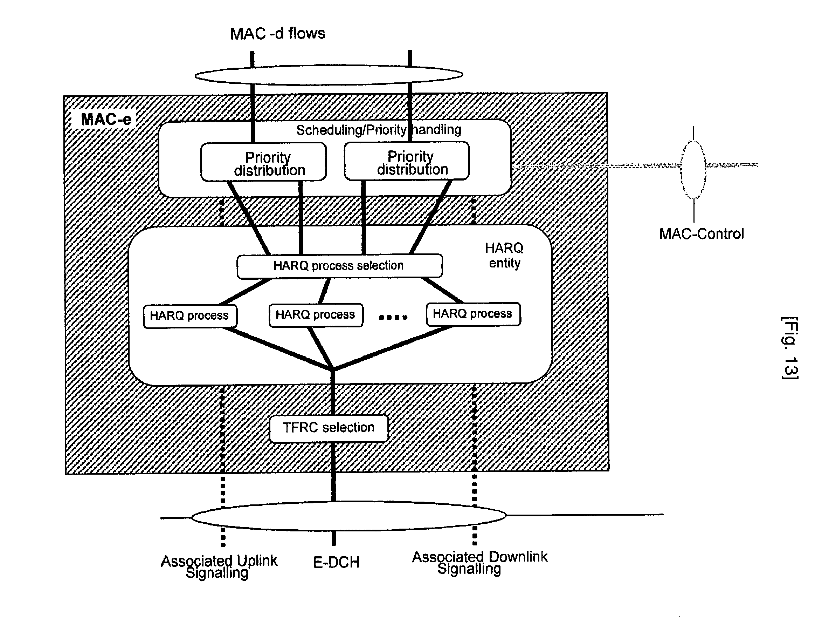

Figure 13 shows a first embodiment of a MAC-e structure of a transmitting side which does not use the TSN in accordance with the present invention. The MAC-e of Figure 13 is different from that of the conventional art in that it does not use a priority queue. Specifically, the TSN in the conventional art is used to determine a priority level of MAC-e PDUs in one priority queue. Therefore, in the present invention, not using the TSN precludes having to determine the order of the MAC-e PDUs, which results in the MAC-e not requiring a priority queue.

Therefore, with reference to Figure 13, the MAC-e determines the MAC-d PDUs received from the MAC-d according to their priority level to deliver them to an HARQ entity. The HARQ entity then constructs the MAC-e PDUs without TSN information by using the MAC-d PDUs with the same priority level and transmits them to the radio interface.

The present invention also proposes a structure for optimizing the structures of the MAC-e and the MAC-d as well as the reordering operation according to each logical channel. For example, with reference to Figure 7, the value of PID of the MAC-E PDU is used in the conventional art to discriminate between MAC-d SDUs transferred from the upper stage to the MAC layer according to priority level, construct each MAC-e PDU with MAC-d SDUs with the same priority level when each MAC-e PDU is transmitted to the radio interface, and inform the receiving side regarding a priority level of a corresponding MAC-e PDU so that MAC-e PDUs with the same PID can be processed in each corresponding reordering buffer at the receiving side. In this respect, MAC-d PDUs, having a C/T field, with the same C/T value corresponding to the same logical channel, therefore have the same priority level. Accordingly, in the related art, a priority level of a corresponding MAC-d SDU can be recognized by using the C/T field, but the transmitting side and the receiving side discriminate and process MAC-e PDUs once again according to the PID, thereby unnecessarily wasting process resources. Additionally, the PID, which occupies up to 3 bits in the MAC-e PDU, generates additional overhead thereby degrading data transmission efficiency over the radio interface.

As proposed in the present invention, since logical channel reordering buffers existing according to logical channels perform the reordering operation, the reordering buffer for each priority level is not necessary. It is also not necessary for the transmitting side to discriminately process the MAC-d PDUs according to priority level. This means that the MAC-e of the transmitting side does not require the priority distribution function.

The present invention additionally proposes a structure of the MAC-e and the MAC-d which operate without the PID. Specifically, the present invention proposes that when the MAC-e generates the MAC-e PDUs, the MAC-e processes MAC-d PDUs received from the MAC-d without discriminating between them. Specifically, the MAC-e constructs the MAC-d PDU without classifying the MAC-d PDUs received from the MAC-d and transmits it.

Preferably, before receiving the MAC-d PDUs from the MAC-d, the MAC-e can inform the MAC-d regarding a priority level of each MAC-d PDU to be received or logical channels. In addition, the MAC-e can additionally inform the MAC-d about the number of MAC-d PDUs to be received.

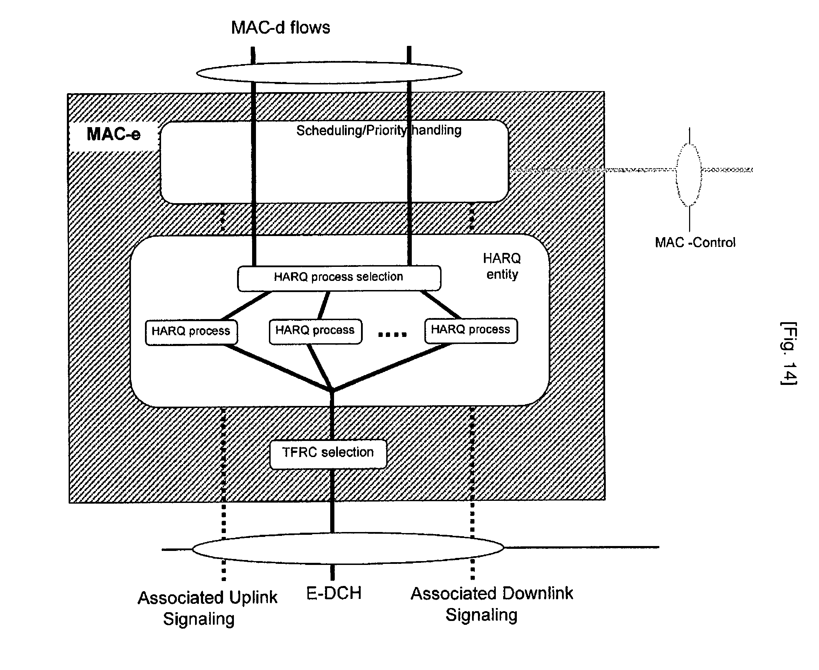

Figure 14 shows a second embodiment of a MAC-e structure of the transmitting side which does not discriminate according to a PID or a priority level in accordance with the present invention.

The operation of the MAC-e illustrated in Figure 14 is different from that of the conventional art in that, when the MAC-e generates a MAC-e PDU, it requests data from the MAC-d and the MAC-d transfers MAC-d PDUs in standby in each logical channel to the MAC-e according to the request of the MAC-e.

In addition, the MAC-e can check the amount of data accumulated in each logical channel, a priority level of each logical channel, the amount of data that the MAC-e can transmit or combination of data that the MAC-e can use in order to determine a combination of data to be used and inform the MAC-d regarding the amount of data to be received by each logical channel. Then, the MAC-d receives data from each logical channel according to the request of the MAC-e and transfers it to the MAC-e. Accordingly, the MAC-e generates the MAC-e PDU by using the data received from the MAC-d.

The MAC-e does not manage a priority queue or a PID since the PID is not used in the MAC-e PDU. If the MAC-e desires to know the amount of data accumulated in each logical channel, it can directly request the information from the upper stage or from the MAC-d.

The data combination refers to combination of MAC-e PDUs that the MAC-e can generate. The data combination is indicated by each size of different types of MAC-d PDUs and the number of MAC-d PDUs corresponding to each size of the MAC-d PDUs. The data combination that can be used by the transmitting side is variable depending on a channel condition and establishment of a network and the transmitting side can select one of allowed combinations and transmit it.

The structure of the MAC-e illustrated in Figure 14 has flexibility, which means the MAC-e may or may not use the TSN. Specifically, in the structure of the MAC-e, when the HARQ entity generates a MAC-e PDU with MAC-d PDUs transferred through a MAC-d flow, it may or may not add a TSN value sequentially, since addition of the TSN is ineffective as mentioned above.

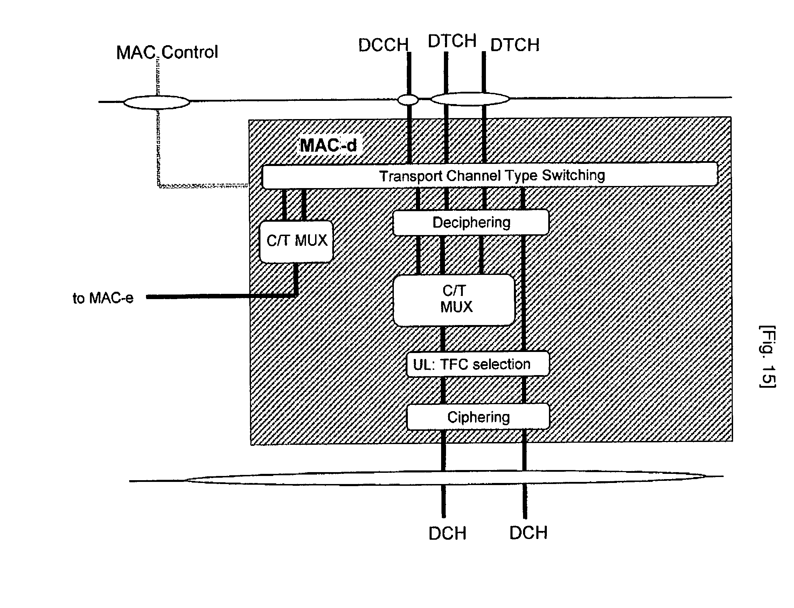

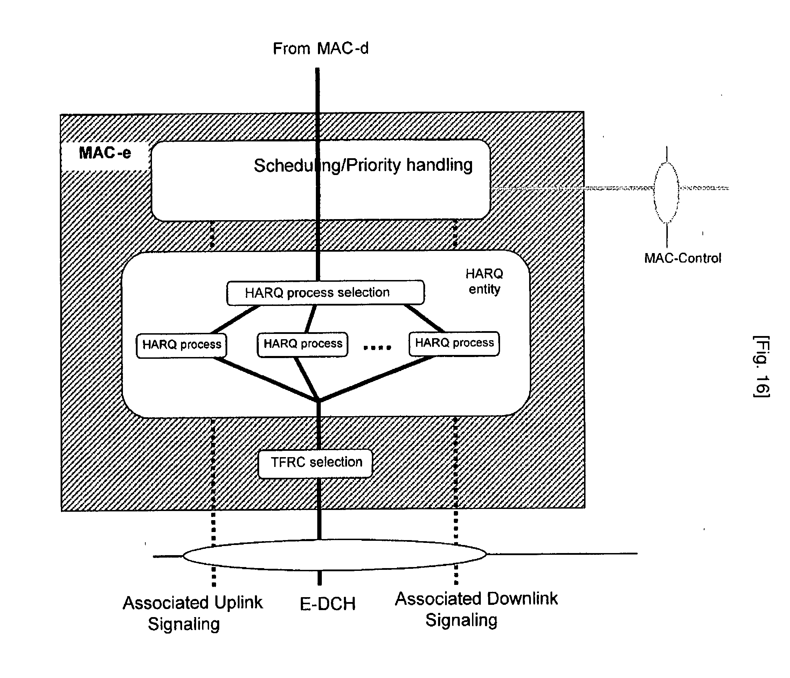

In addition, as illustrated in Figures 15 and 16, a simpler structure may be devised in which only one connection passage is provided between the MAC-d and the MAC-e, rather than using several MAC-d flows.

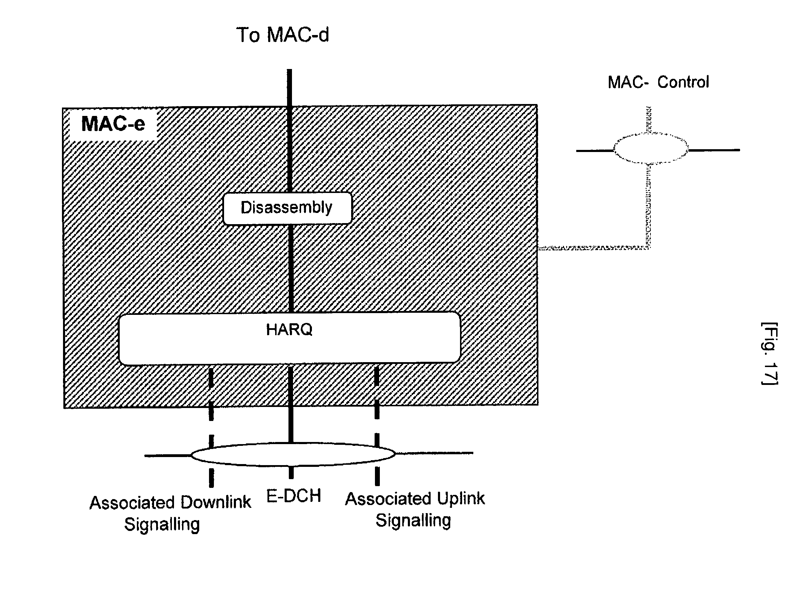

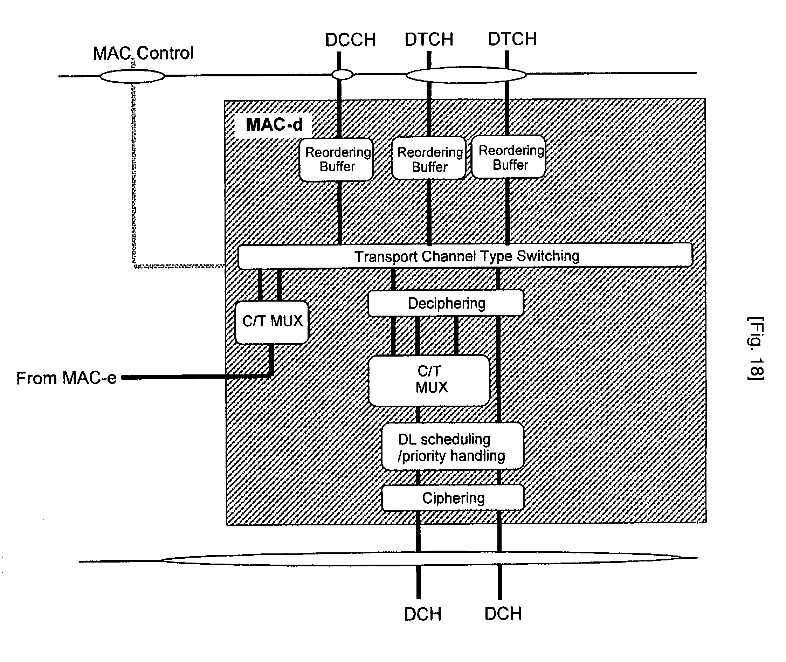

Figure 17 shows a second embodiment of a MAC-e structure of the receiving side in accordance with the present invention and Figure 18 shows a second embodiment of a MAC-d structure of the receiving side in accordance with the present invention.

The operations of the MAC-e and the MAC-d are different from those of the conventional art as follows.

An HARQ entity transfers a successfully received MAC-e PDU immediately to a disassembly entity and the disassembly entity immediately disassembles the received MAC-e PDU to reconfigure it into MAC-d PDUs and transfers the reconfigured MAC-d PDUs to the MAC-d. Then, the MAC-d disassembles each of the received MAC-d PDUs to extract MAC-d SDUs and transfers the extracted MAC-d SDUs to the reordering buffer of each corresponding logical channel by using each C/T field included in the MAC-d PDUs.

The reordering buffer existing for each logical channel reorders the MAC-d SDUs by using a sequence number included in each MAC-d SDU and transfers them to the upper stage.

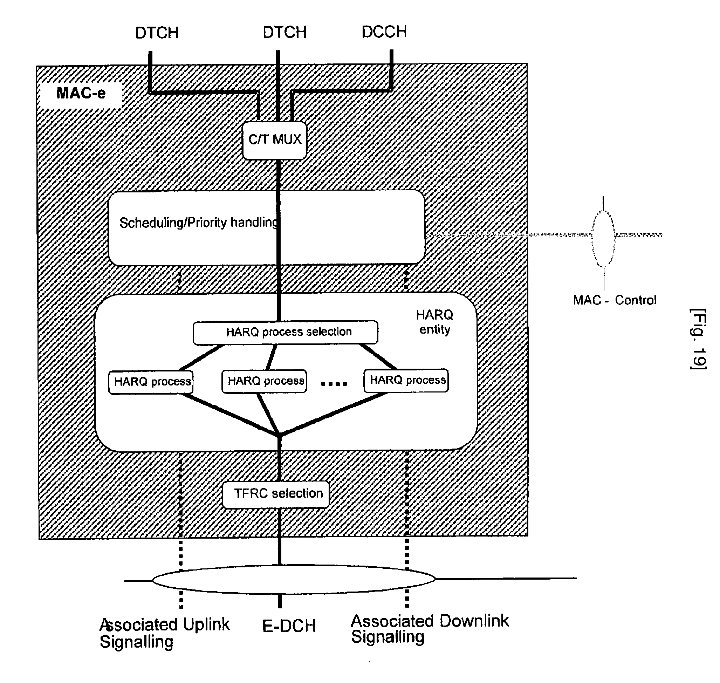

Figure 19 shows a fourth embodiment of a MAC-e structure of the transmitting side, in which the MAC-e can operate more simply, in accordance with the present invention.

In the MAC-e structure of the transmitting side as illustrated in Figure 19, the MAC-e does not receive data of each logical channel through the MAC-d but receives data directly from each logical channel.

Specifically, the MAC-e directly checks the amount of data in standby in each logical channel and determines a combination of data that the MAC-e may transmit based on information on a combination of data that the MAC-e may use or the amount of data that the MAC-e may transmit. The MAC-e then receives MAC-d SDUs fitting the determined data combination from each logical channel to generate a MAC-e PDU. In order to discriminate between each logical channel, the MAC-e forms MAC-d PDUs by adding each MAC-d SDU C/T value received from each logical channel to generate the MAC-e PDU. A C/T MUX block can be positioned in the MAC-e sublayer or between the MAC-e and an upper stage of the MAC-e.

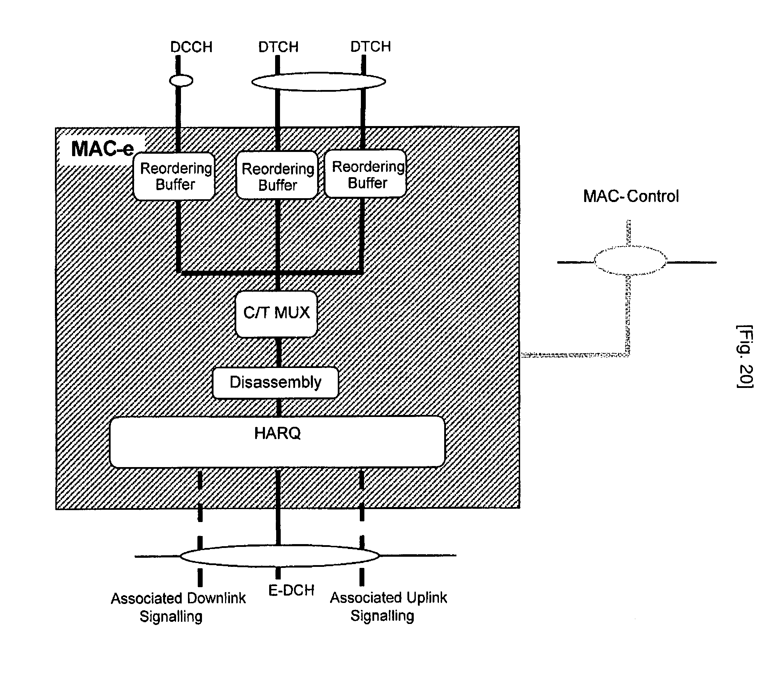

Figure 20 shows a third embodiment of the MAC-e structure of the receiving side in accordance with the present invention.

In the MAC-e structure illustrated in Figure 20, MAC-d SDUs of the MAC-e are directly transferred to each logical channel, not via the MAC-d. Specifically, a HARQ entity transfers successfully received MAC-e PDUs directly to a disassembly entity and the disassembly entity disassembles the received MAC-e PDUs to reconfigure each of them into MAC-d PDUs and transfer them to a C/T MUX entity. The C/T MUX entity then disassembles each of the MAC-d PDUs to extract MAC-d SDUs and transfers the extracted MAC-d SDUs to the reordering buffer of each logical channel by using the C/T field included in each MAC-d PDU.

Upon receiving the MAC-d SDUs, the reordering buffer for each logical channel reorders the MAC-d SDUs in sequence based on each sequence number and transfers them to the upper stage. The C/T MUX entity can be positioned outside the MAC-e or can be added as a new entity in an RLC entity.

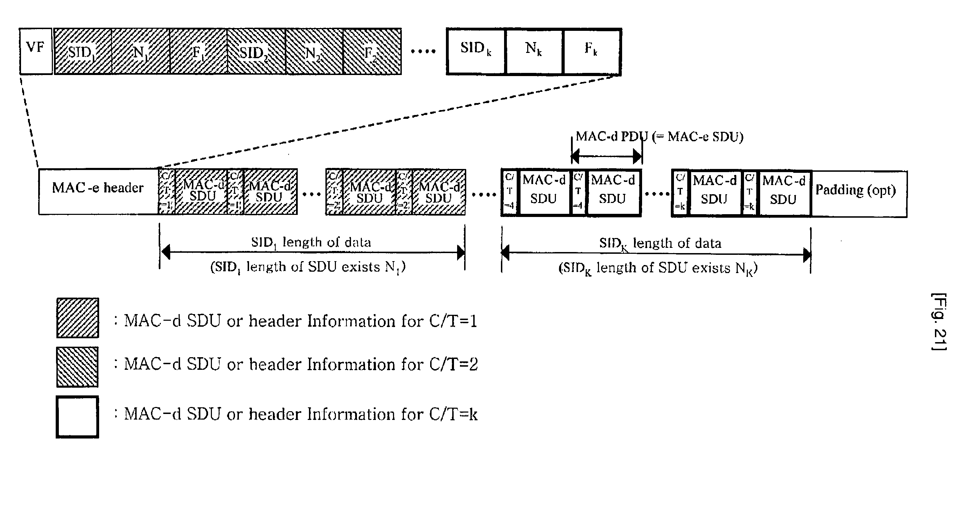

Figures 21 to 29 illustrate various embodiments of structures of the MAC-e PDU. New MAC-e PDU structures which can be used for the MAC-e and the MAC-d in the present invention will now be described with reference to Figures 21 to 29.

Figure 21 shows a first embodiment of the MAC-e PDU in accordance with the present invention.

The MAC-d PDU structure illustrated in Figure 21 is different from that of the conventional art in that it does not have the PID and the TSN. Since the reordering buffers are set by logical channels and the reordering operation is performed by the logical channels, the TSN and the PID value are not necessary.

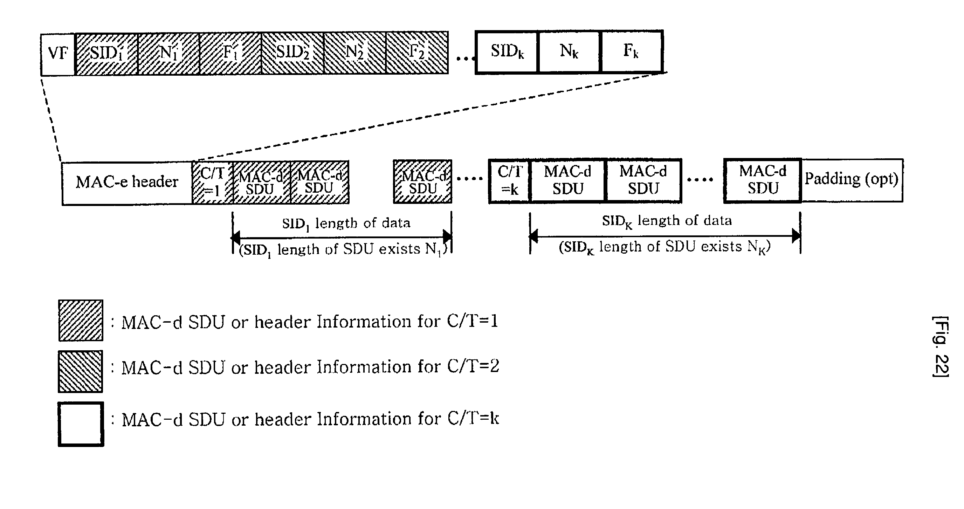

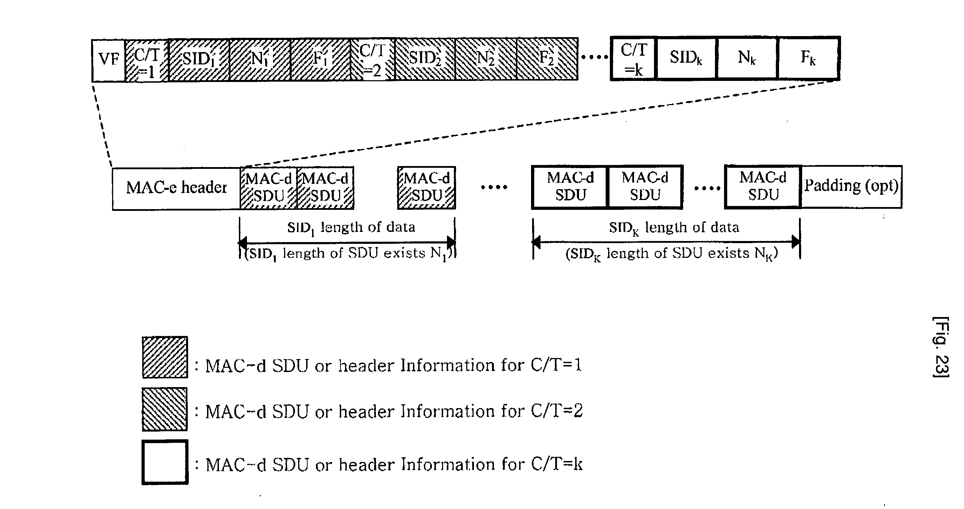

Figure 22 shows a second embodiment of the MAC-e PDU in accordance with the present invention and Figure 23 shows a third embodiment of the MAC-e PDU in accordance with the present invention.

The second and third embodiments of the MAC-e PDU structure are proposed to reduce the number of C/T fields which are included in every MAC-d PDU in the MAC-e PDU structure of Figure 21.

The first to third embodiments of the MAC-e PDU structure can be used for the MAC-e and the MAC-d, which do not use the TSN and the PID information.

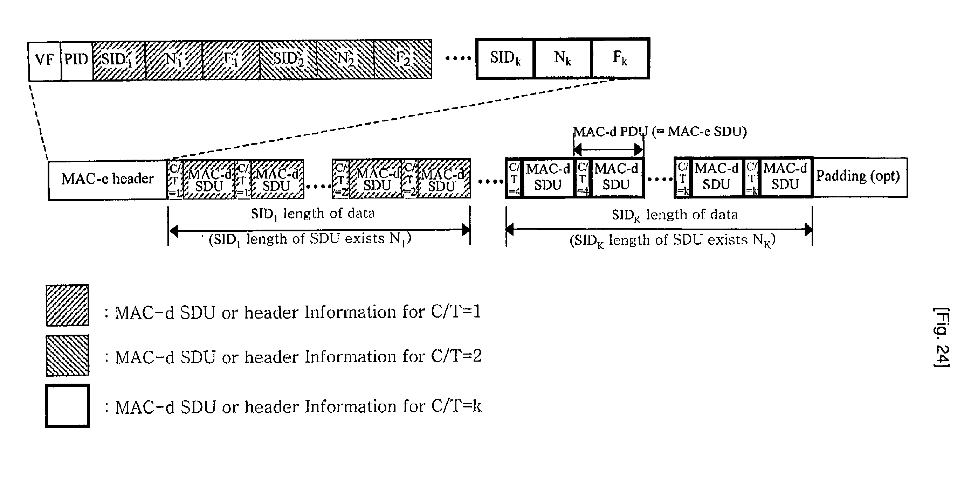

Figure 24 shows a fourth embodiment of the MAC-e PDU in accordance with the present invention.

The MAC-e PDU structure of Figure 24 is different from that of the conventional art in that it does not have the TSN. Since in the present invention, the reordering buffers are set according to logical channels and the reordering operation is performed by the logical channels, the TSN value is not necessary.

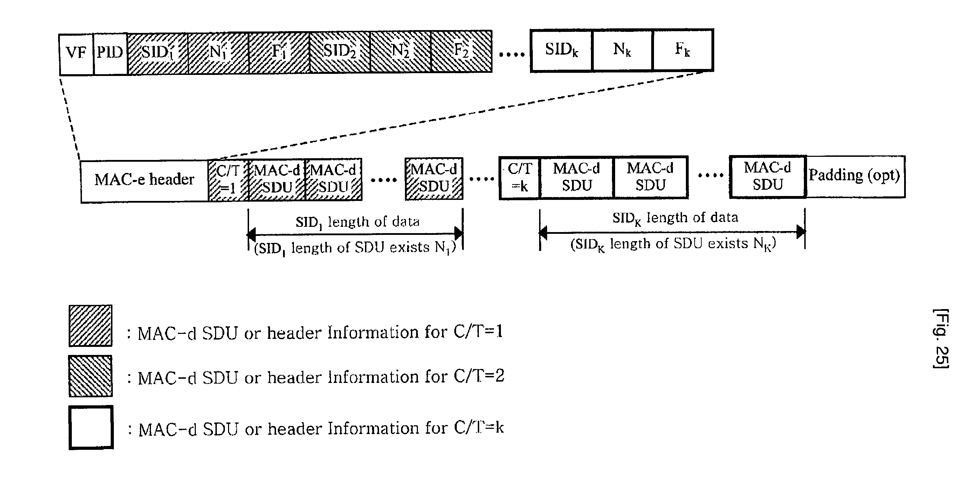

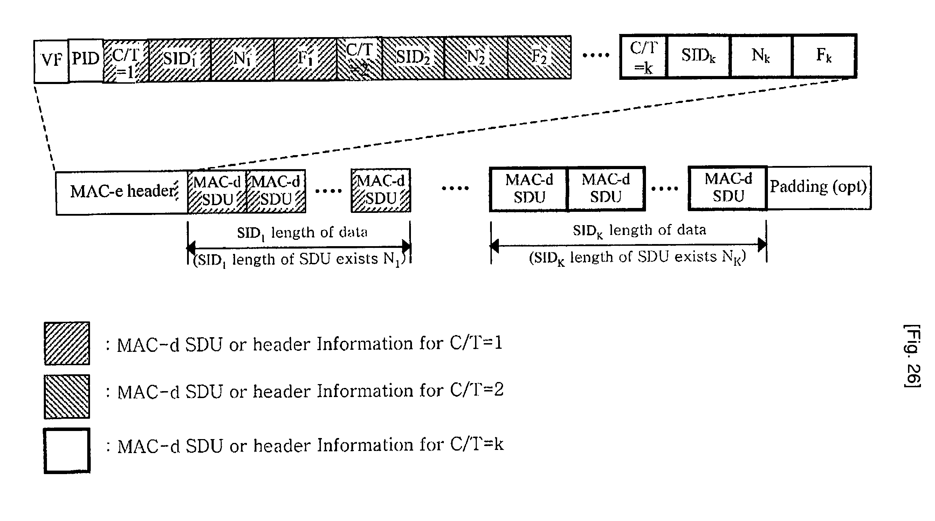

Figure 25 shows a fifth embodiment of the MAC-e PDU in accordance with the present invention and Figure 26 shows a sixth embodiment of the MAC-e PDU in accordance with the present invention.

The fifth and sixth embodiments of the MAC-e PDU structure are proposed to reduce the number of C/T fields which are included in every MAC-d PDU in the MAC-e PDU structure of Figure 24.

The fourth to sixth embodiments of the MAC-e PDU structure can be used for the MAC-e and the MAC-d which do not use the TSN information.

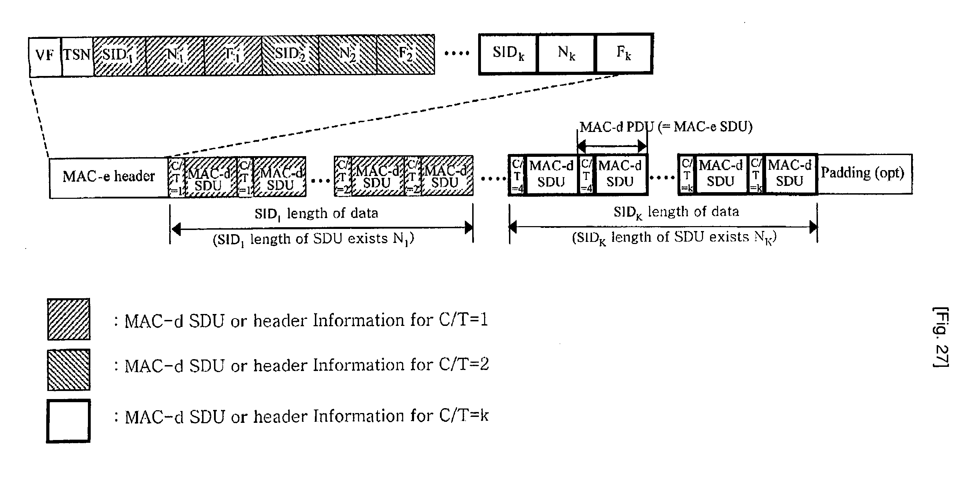

Figure 27 shows a seventh embodiment of the MAC-e PDU in accordance with the present invention.

The MAC-e PDU structure of Figure 27 is different from that of the conventional art in that it does not have the PID. Since in the present invention, the reordering buffers are set according to logical channels and the reordering operation is performed by the logical channels, the PID value is not necessary.

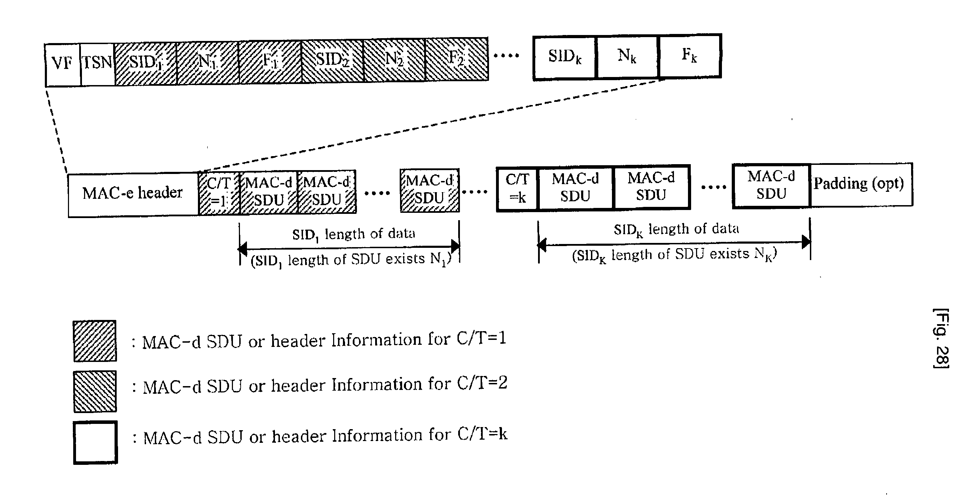

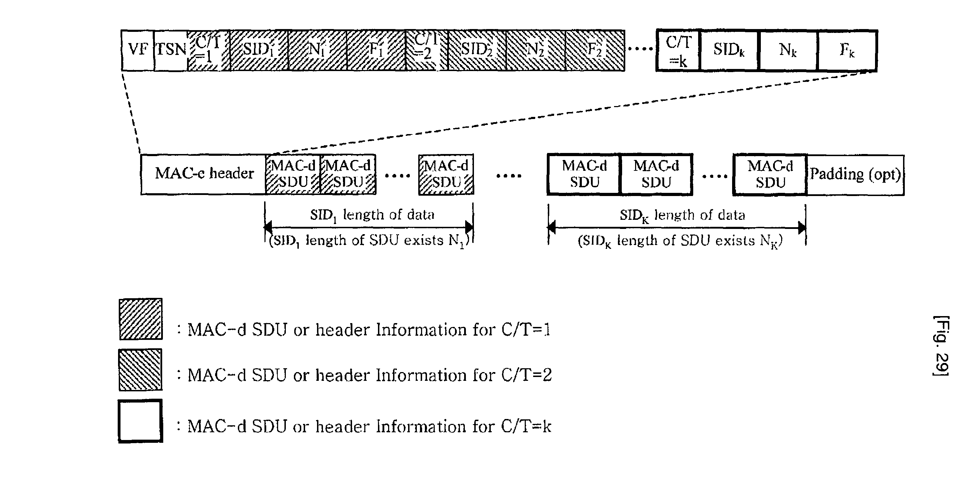

Figure 28 shows an eighth embodiment of the MAC-e PDU in accordance with the present invention and Figure 29 shows a ninth embodiment of the MAC-e PDU in accordance with the present invention.

The eighth and ninth embodiments of the MAC-e PDU structure are proposed to reduce the number of C/T fields which are included in every MAC-d PDU in the MAC-e PDU structure of Figure 27.

The seventh to ninth embodiments of the MAC-e PDU structure can be used for the MAC-e and the MAC-d which do not use the PID information.

As so far described, the system for processing data unit of the radio protocol layer in accordance with the present invention has the following advantages.

Because a logical channel reordering buffer for each logical channel reorders the MAC-d SDUs, unnecessary data transmission delay is prevented and, since the MAC-e PDU does not use the header, the transmission efficiency at the radio interface can be enhanced.

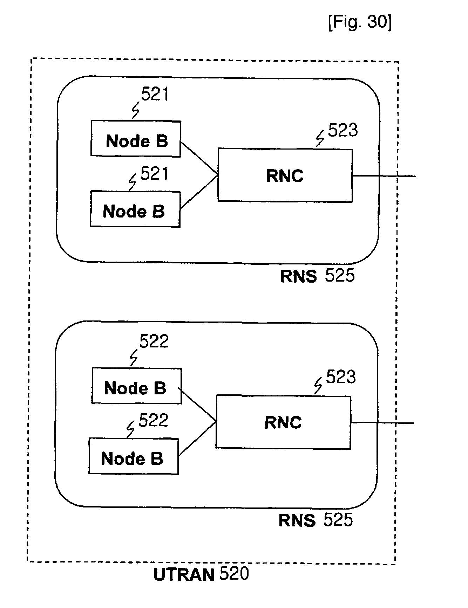

FIG. 30 illustrates a block diagram of a UTRAN 520 according to the preferred embodiment of the present invention. The UTRAN 520 includes one or more radio network sub-systems (RNS) 525. Each RNS 525 includes a radio network controller (RNC) 523 and a plurality of Node-Bs (base stations) 521 managed by the RNC. The RNC 523 handles the assignment and management of radio resources and operates as an access point with respect to the core network. Furthermore, the RNC 523 is adapted to perform the methods of the present invention.

The Node-Bs 521 receive information sent by the physical layer of the terminal 400 through an uplink, and transmit data to the terminal through a downlink. The Node-Bs 521 operate as access points, or as a transmitter and receiver, of the UTRAN 520 for the terminal 400. It will be apparent to one skilled in the art that the mobile communication device 400 may be readily implemented using, for example, the processing unit 410 or other data or digital processing device, either alone or in combination with external support logic.

By utilizing the UTRAN described above, the present invention may receive at least one data unit from each of a plurality of logical channels, construct a data block comprising the at least one data unit from each of the plurality of logical channels and assign a sequence number to the data block, transmit the data block, receive and process the data block such that the at least one data unit from each of the plurality of logical channels is forwarded to a reordering buffer for each of the plurality of logical channels, and deliver the at least one data unit to each of the plurality of logical channels according to the sequence number.

Although the present invention is described in the context of mobile communication, the present invention may also be used in any wireless communication systems using mobile devices, such as PDAs and laptop computers equipped with wireless communication capabilities. Moreover, the use of certain terms to describe the present invention should not limit the scope of the present invention to certain type of wireless communication system, such as UMTS. The present invention is also applicable to other wireless communication systems using different air interfaces and/ or physical layers, for example, TDMA, CDMA, FDMA, WCDMA, etc.

The preferred embodiments may be implemented as a method, apparatus or article of manufacture using standard programming and/or engineering techniques to produce software, firmware, hardware, or any combination thereof. The term "article of manufacture" as used herein refers to code or logic implemented in hardware logic (e.g., an integrated circuit chip, Field Programmable Gate Array (FPGA), Application Specific Integrated Circuit (ASIC), etc.) or a computer readable medium (e.g., magnetic storage medium (e.g., hard disk drives, floppy disks, tape, etc.), optical storage (CD-ROMs, optical disks, etc.), volatile and non-volatile memory devices (e.g., EEPROMs, ROMs, PROMS, RAMs, DRAMs, SRAMs, firmware, programmable logic, etc.).

Code in the computer readable medium is accessed and executed by a processor. The code in which preferred embodiments are implemented may further be accessible through a transmission media or from a file server over a network. In such cases, the article of manufacture in which the code is implemented may comprise a transmission media, such as a network transmission line, wireless transmission media, signals propagating through space, radio waves, infrared signals, etc. Of course, those skilled in the art will recognize that many modifications may be made to this configuration without departing from the scope of the present invention, and that the article of manufacture may comprise any information bearing medium known in the art.

The logic implementation shown in the figures described specific operations as occurring in a particular order. In alternative implementations, certain of the logic operations may be performed in a different order, modified or removed and still implement preferred embodiments of the present invention. Moreover, steps may be added to the above described logic and still conform to implementations of the invention.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art. In the claims, means-plus-function clauses are intended to cover the structure described herein as performing the recited function and not only structural equivalents but also equivalent structures.

## Claims

1. An apparatus (523) for processing a Medium Access Control, MAC, protocol data unit in a communications system, the apparatus comprising:
a MAC protocol layer, **characterized in that** the MAC protocol layer is capable of working in compliance with the High-Speed Uplink Packet Access, HSUPA, standard and comprises:
a logical channel reordering buffer configured to reorder MAC service data units, which is provided for each of a plurality of logical channels,
wherein the plurality of logical channels are provided between the MAC protocol layer and a Radio Link Control, RLC, protocol layer;
means for receiving the MAC protocol data unit comprising MAC service data units and sequence numbers included in the MAC service data units,
wherein the MAC protocol data unit includes a logical channel identifier to identify each of the MAC service data units belonging to a corresponding logical channel and includes size information to indicate a size of the MAC service data units;
means for performing reordering operation such that the MAC service data units are organized according to the received sequence numbers;
means for processing the MAC protocol data unit such that the MAC service data units are forwarded to a corresponding logical channel reordering buffer associated with the corresponding logical channel of the plurality of logical channels,
wherein, there is one reordering buffer for the corresponding logical channel of the plurality of logical channels; and
means for delivering the MAC service data units stored in the corresponding logical channel reordering buffer to the corresponding logical channel,
wherein the MAC protocol layer contains two sub-layers, a MAC-d sub-layer and a MAC-e sub-layer, and the MAC-e sub-layer is logically located under the MAC-d sub-layer, and
wherein the MAC-e sub-layer is adapted to use an Enhanced Dedicated Channel, E-DCH, transport channel.

2. The apparatus according to claim 1, wherein the MAC protocol layer is capable of delivering the MAC service data units after performing a reordering operation on the MAC service data units stored in the corresponding reordering buffer.

3. The apparatus according to one of the preceding claims, wherein the MAC protocol layer performs the delivering step immediately for MAC protocol data units having sequence numbers that are in-sequence.

4. The apparatus according to one of the preceding claims, wherein the MAC protocol layer is capable of storing MAC service data units having sequence numbers that are out-of-sequence in the corresponding reordering buffer until in-sequence delivery is possible.

5. The apparatus according to one of the preceding claims, wherein the logical channel identifier is a logical channel identifier, C/T, field.

6. The apparatus according to one of the preceding claims, wherein the logical channel identifier is in a payload of the MAC protocol data unit.

7. The apparatus according to one of the preceding claims, wherein the MAC protocol layer is capable of receiving the MAC protocol data unit, processing the received MAC protocol data unit and delivering the MAC service data units without using Priority IDentification, PID, information.

8. The apparatus according to one of the preceding claims, wherein the MAC protocol data units are related to a real-time streaming or voice service.

## Patentansprüche

1. Vorrichtung (523) zum Verarbeiten einer Medium Access Control-(MAC)-Protokolldateneinheit in einem Kommunikationssystem, wobei die Vorrichtung aufweist:
eine MAC-Protokollschicht, **dadurch gekennzeichnet, dass** die MAC-Protokollschicht dazu ausgebildet ist, gemäß dem High-Speed Uplink Packet Access-(HSUPA)-Standard zu arbeiten, und aufweist:
einen Puffer zum Neuordnen logischer Kanäle, der zum Neuordnen von MAC-Dienstdateneinheiten ausgebildet ist, der für jeden einer Vielzahl logischer Kanäle bereitgestellt wird,
wobei die Vielzahl der logischen Kanäle zwischen der MAC-Protokollschicht und einer Radio Link Control (RLC)-Protokollschicht bereitgestellt werden;
Mittel zum Empfangen der MAC-Protokolldateneinheit, die MAC-Dienstdateneinheiten und Folgenummern aufweist, die in den MAC-Dienstdateneinheiten enthalten sind,
wobei die MAC-Protokolldateneinheit einen logischen Kanalidentifizierer aufweist, um jede der zu einem entsprechenden logischen Kanal gehörenden MAC-Dienstdateneinheiten zu identifizieren, und Größeninformationen aufweist, um eine Größe der MAC-Dienstdateneinheiten anzugeben;
Mittel zum Durchführen der Neuordnungsoperation, sodass die MAC-Dienstdateneinheiten gemäß deM empfangenen Folgenummern angeordnet werden;
Mittel zum Verarbeiten der MAC-Protokolldateneinheit, sodass die MAC-Dienstdateneinheiten an einen entsprechenden Puffer zum Neuordnen logischer Kanäle weitergeleitet werden, der dem entsprechenden logischen Kanal aus der Vielzahl der logischen Kanäle zugeordnet ist,
wobei ein Neuordnungspuffer für den entsprechenden logischen Kanal aus der Vielzahl logischer Kanäle existiert; und
Mittel zum Übermitteln der in dem entsprechenden Puffer zum Neuordnen logischer Kanäle gespeicherten MAC-Dienstdateneinheiten an den entsprechenden logischen Kanal,
wobei die MAC-Protokollschicht zwei untergeordnete Schichten aufweist, eine untergeordnete Schicht MAC-d und eine untergeordnete Schicht MAC-e, und die untergeordnete Schicht MAC-e logisch unter der untergeordneten Schicht MAC-d angeordnet ist, und
wobei die untergeordnete Schicht MAC-e dazu ausgebildet ist, einen Enhanced Dedicated Channel (E-DCH)-Transportkanal zu verwenden.

2. Vorrichtung nach Anspruch 1, wobei die MAC-Protokollschicht die MAC-Dienstdateneinheiten nach Durchführen einer Neuordnungsoperation für die im entsprechenden Neuordnungspuffer gespeicherten MAC-Dienstdateneinheiten übermitteln kann.

3. Vorrichtung nach einem der vorhergehenden Ansprüche, wobei die MAC-Protokollschicht den Übermittlungsschritt sofort für MAC-Protokolldateneinheiten durchführt, die aufeinanderfolgende Folgenummern aufweisen.

4. Vorrichtung nach einem der vorhergehenden Ansprüche, wobei die MAC-Protokollschicht MAC-Dienstdateneinheiten, deren Folgennummern nicht in Folge geordnet sind, in der entsprechenden Neuordnungspuffereinheit speichern kann, bis eine Übermittlung in der korrekten Reihenfolge möglich ist.

5. Vorrichtung nach einem der vorhergehenden Ansprüche, wobei der logische Kanalidentifizierer ein logisches Kanalidentifizierer (C/T)-Feld ist.

6. Vorrichtung nach einem der vorhergehenden Ansprüche, wobei der logische Kanalidentifizierer sich in Nutzdaten (Payload) der MAC-Protokolldateneinheit befindet.

7. Vorrichtung nach einem der vorhergehenden Ansprüche, wobei die MAC-Protokollschicht dazu ausgebildet ist, die MAC-Protokolldateneinheit zu empfangen, die empfangene MAC-Protokolldateneinheit zu verarbeiten und die MAC-Dienstdateneinheiten ohne die Verwendung von Priority Identification (PID)-Informationen zu übermitteln.

8. Vorrichtung nach einem der vorhergehenden Ansprüche, wobei die MAC-Protokolldateneinheiten auf einen Echtzeit-Streaming-Dienst oder Echtzeit-Sprachdienst bezogen sind.

## Revendications

1. Appareil (523) de traitement d'une unité de données de protocole de Contrôle d'Accès au Support, MAC, dans un système de communications, l'appareil comprenant :
une couche de protocole MAC, **caractérisé en ce que** la couche de protocole MAC est apte à fonctionner en conformité avec la norme d'Accès par Paquets Haut Débit en Liaison Montante, HSUPA, et comprend :
un tampon de réordonnancement de canaux logiques configuré pour réordonnancer des unités de données de service MAC, qui est prévu pour chacun parmi une pluralité de canaux logiques,
dans lequel la pluralité de canaux logiques sont prévus entre la couche de protocole MAC et une couche de protocole de Contrôle de Liaison Radio, RLC ;
un moyen pour recevoir l'unité de données de protocole MAC comprenant des unités de données de service MAC et des numéros de séquences inclus dans les unités de données de service MAC,
dans lequel l'unité de données de protocole MAC inclut un identifiant de canal logique pour identifier chacune des unités de données de service MAC appartenant à un canal logique correspondant et inclut une information de taille pour indiquer une taille des unités de données de service MAC ;
un moyen pour exécuter une opération de réordonnancement de façon à ce que les unités de données de service MAC soient organisées conformément aux numéros de séquences reçus ;
un moyen pour traiter l'unité de données de protocole MAC de façon à ce que les unités de données de service MAC soient envoyées à un tampon de réordonnancement de canaux logiques correspondant associé avec le canal logique correspondant parmi la pluralité de canaux logiques,
dans lequel il y a un tampon de réordonnancement pour le canal logique correspondant parmi la pluralité de canaux logiques ; et
un moyen pour délivrer les unités de données de service MAC stockées dans le tampon de réordonnancement de canaux logiques correspondant jusqu'au canal logique correspondant,
dans lequel la couche de protocole MAC contient deux sous-couches, une sous-couche MAC-d et une sous-couche MAC-e, et la sous-couche MAC-e est située logiquement sous la sous-couche MAC-d, et
dans lequel la sous-couche MAC-e est adaptée à utiliser un canal de transport de type Canal Dédié Amélioré, E-DCH.

2. Appareil selon la revendication 1, dans lequel la couche de protocole MAC est apte à délivrer les unités de données de service MAC après exécution d'une opération de réordonnancement sur les unités de données de service MAC stockées dans le tampon de réordonnancement correspondant.

3. Appareil selon l'une des revendications précédentes, dans lequel la couche de protocole MAC exécute l'étape de délivrance immédiatement pour des unités de données de protocole MAC ayant des numéros de séquences qui sont en séquence.

4. Appareil selon l'une des revendications précédentes, dans lequel la couche de protocole MAC est apte à stocker des unités de données de service MAC ayant des numéros de séquences qui sont hors séquence dans le tampon de réordonnancement correspondant jusqu'à ce qu'une délivrance en séquence soit possible.

5. Appareil selon l'une des revendications précédentes, dans lequel l'identifiant de canal logique est un champ d'identifiant de canal logique, C/T.

6. Appareil selon l'une des revendications précédentes, dans lequel l'identifiant de canal logique est dans une charge utile de l'unité de données de protocole MAC.

7. Appareil selon l'une des revendications précédentes, dans lequel la couche de protocole MAC est apte à recevoir l'unité de données de protocole MAC, à traiter l'unité de données de protocole MAC reçue et à délivrer les unités de données de service MAC sans utiliser une information d'IDentification de Priorité, PID.

8. Appareil selon l'une des revendications précédentes, dans lequel les unités de données de protocole MAC sont associées à un service de diffusion en flux ou vocal en temps réel.
